# EUROPÄISCHE PATENTSCHRIFT

(11) **EP 3 216 587 B1**
(45) Veröffentlichungstag und Bekanntmachung des Hinweises auf die Patenterteilung: **06.11.2019**
(21) Anmeldenummer: 17000728.0
(22) Anmeldetag: 27.09.2013
(51) Int. Cl.: B29C 65/78, B31B 70/00, B29C 65/74, B29C 65/02, B31B 70/14, B31B 70/64, B31B 155/00, B31B 160/10, B65H 20/18

(54) **FÜGEANLAGE SOWIE VERFAHREN ZUM HERSTELLEN EINES PRODUKTS MITTELS EINER FÜGEANLAGE**
JOINING SYSTEM AND METHOD FOR PRODUCING A PRODUCT USING A JOINING SYSTEM
INSTALLATION DE SOUDURE ET PROCÉDÉ DE FABRICATION D'UN PRODUIT À L'AIDE D'UNE INSTALLATION DE SOUDURE

(30) Priorität: 09.11.2012 DE 102012021920; 09.11.2012 US 201261796398 P
(43) Veröffentlichungstag der Anmeldung: 13.09.2017
(62) Teilanmeldung aus: 13802863.4
(73) Patentinhaber: Kiefel GmbH, 83395 Freilassing (DE)
(72) Erfinder: Böhm, Rüdiger, 76744 Wörth am Rhein (DE); Horvat, Tibor, 83410 Laufen (DE); Wilhelm, Thomas, 83278 Traunstein (DE)
(74) Vertreter: Farago-Schauer, Peter Andreas

(56) Entgegenhaltungen:
- WO-A2-2006/042710
- US-A- 4 489 873

## Beschreibung

Die Erfindung betrifft eine Fügeanlage, eingerichtet zum Herstellen eines Beutels für medizinische Zwecke, mit einer Nutzenerzeugstation für eine Folie, mit einem öffen- und schließbaren Bearbeitungswerkzeug an der Nutzenerzeugstation, wobei die Folie in einer Maschinenrichtung durch die Fügeanlage transportiert wird und zum Einführen der Folie in das geöffnete Bearbeitungswerkzeug eine angetriebene Einführeinrichtung vorgesehen ist, welche einen Greifer aufweist, welcher dazu eingerichtet ist, die Folie während des Vorschubs in einem Greifbereich gegriffen zu halten und sich mit einer Entfernbewegung von der Folie zu entfernen.

Die Erfindung betrifft auch ein Verfahren zum Herstellen eines Zwischen- oder Endprodukts mittels einer Fügeanlage.

Eine Fügeanlage ist beispielsweise aus der EP 1 780 000 B1 bekannt. Eine Folienbahn wird in einer Maschinenrichtung durch die Fügeanlage transportiert. Ein Bearbeitungswerkzeug wird geöffnet, danach greifen zwei Greifer die Folie und führen diese in das geöffnete Bearbeitungswerkzeug hinein. Das Bearbeitungswerkzeug schließt sich und die Greifer lösen sich anschließend von der Folie. Noch während das Bearbeitungswerkzeug geschlossen ist, fahren die Greifer am Bearbeitungswerkzeug vorbei gegen die Maschinenrichtung, um mit einer verminderten Taktzeit die Folie für den nächsten Vorschub zu greifen.

Ferner ist aus der WO 2006/042710 A2 eine Vorrichtung zur Herstellung von Kunststoffbeuteln aus Kunststofffolie bekannt, welche einen oder mehrere Folienspender zur Bereitstellung von Kunststofffolien, einen oder mehrere Portspender zur Bereitstellung von Kunststoffelementen, ein kombiniertes Schweiß-/Schneidwerkzeug zum a) Anbringen der Kunststoffelemente an die Kunststoffbeutel zur Bildung von Ports, b) zum Zusammenschweißen der Kunststofffolien an der Schweißform und c) zum Schneiden der Kunststofffolien, sowie ein weiteres Schweißwerkzeug zum Nachschweißen der Ports und eine Transferstation zur Übernahme der Kunststoffbeutel für die weitere Bearbeitung umfasst.

In der US 4 489 873 A ist ein Mechanismus zum schrittweisen Zuführen eines fortlaufenden bandartigen Gegenstands offenbart, welcher im Wesentlichen aus a) einem Support, aus b) einem Schlitten, welcher von dem Support abgestützt ist und gegenüber diesem parallel zu der geradlinigen Bahn des bandartigen Gegenstandes beweglich ist, wobei der Schlitten eine erste Klemmbacke aufweist, die von diesem absteht, um den bandartigen Gegenstand auf einer Seite desselben abzustützen, aus c) einer Einrichtung zum Hin- und Herbewegen des Schlittens zwischen einer vorgeschobenen Stellung und einer zurückgezogenen Stellung, und aus d) einer zweiten Klemmbacke besteht, die von dem Schlitten getragen wird und gegenüber diesem rechtwinklig zu der geradlinigen Bahn zwischen einer Klemmstellung, in der die zweite Klemmbacke eng neben der ersten Klemmbacke angeordnet ist, um den bandartigen Gegenstand dazwischen einzuklemmen, und einer Freigabestellung bewegbar ist, in der die zweite Klemmbacke im Abstand von der ersten Klemmbacke angeordnet ist, um den bandartigen Gegenstand freizugeben. Dieser Mechanismus zeichnet sich insbesondere durch eine erste Feder aus, die zwischen dem Schlitten und der zweiten Klemmbacke angeordnet ist und diese normalerweise in die Klemmstellung belastet. Außerdem umfasst der Mechanismus eine Steuerkurvenplatte, die in einer Bewegungsbahn der zweiten Klemmbacke in einer einstellbaren Lage nahe einem stromabwärts liegenden Ende der Bewegungsbahn angeordnet ist, wobei die Steuerkurvenplatte bei der Annäherung des Schlittens an seine vorgeschobene Stellung mit der zweiten Klemmbacke in Eingriff bringbar ist, um diese gegen die Vorspannkraft der ersten Feder von der Klemmstellung in die Freigabestellung zu bewegen, sowie eine Sperreinrichtung, die von dem Schlitten getragen wird, und die betätigbar ist, um die zweite Klemmbacke zu verriegeln, wenn diese in die Freigabestellung gelangt. Der Mechanismus zeichnet sich weiter durch eine Entriegelungseinrichtung aus, die nahe einem stromaufwärts liegenden Ende der Bewegungsbahn der zweiten Klemmbacke angeordnet ist und die bei einer Annäherung des Schlittens an seine zurückgezogene Stellung betätigbar ist, um die Sperreinrichtung mit der zweiten Klemmbacke außer Eingriff zu bringen, die dadurch unter der Kraft der ersten Feder in die Klemmstellung zurückkehren kann. Der Erfindung liegt die Aufgabe zugrunde, den Stand der Technik zu verbessern oder ihm eine Alternative zur Seite zu stellen.

Nach einem ersten Aspekt der Erfindung löst die gestellte Aufgabe eine Fügeanlage mit einer Nutzenerzeugstation für eine Folie, mit einem öffen- und schließbaren Bearbeitungswerkzeug an der Nutzenerzeugstation, wobei die Folie in einer Maschinenrichtung durch die Fügeanlage transportiert wird, und wobei zum Einführen der Folie in das geöffnete Bearbeitungswerkzeug eine angetriebene Einführeinrichtung vorgesehen ist, welche einen Greifer aufweist, welcher dazu eingerichtet ist, die Folie während des Vorschubs in einem Greifbereich gegriffen zu halten und sich mit einer Entfernbewegung von der Folie zu entfernen, wobei die Fügeanlage dazu eingerichtet ist, den Greifbereich zumindest teilweise einem Nutzen zuzuschlagen, indem die Fügeanlage dazu eingerichtet ist, über den Greifbereich hinüber oder um den Greifbereich herum die Folie zu bearbeiten, sodass der Greifbereich jedenfalls nicht vollständig zu Abfallgitter wird, indem die Fügeanlage dazu eingerichtet ist, eine Umfangsschweißung des Beutels zumindest einen Teil des Greifbereichs umgebend herzustellen und/oder eine Schweißnaht durch den Greifbereich hindurch verlaufend herzustellen.

Begrifflich sei folgendes erläutert:
Die "Fügeanlage" kann insbesondere eine Schweißstation und/oder eine Trennstation und/oder eine kombinierte Schweiß-Trenn-Station aufweisen.

Die "Nutzenerzeugstation" ist diejenige Station an der Fügeanlage, deren Werkzeug die letztendliche Form des Nutzens vorgibt und somit eine Aufteilung der Folie in den Nutzen und das Abfallgitter vornimmt. Dabei sei darauf hingewiesen, dass ein Abfallgitter nicht zwingend anfallen muss. Im Rahmen des hier vorliegenden Erfindungskomplexes ist es vielmehr auch möglich, die gesamte Folie zu Nutzen einzusetzen, also ohne Abfallgitter zu arbeiten.

Im Falle einer Verschweißung von Folien zu beispielsweise Beuteln lässt sich der Nutzen leicht daran erkennen, dass seine Umrandung im Wesentlichen die Schweißkontur der beiden Folienlagen gegeneinander ist, wobei in der Regel ein geringfügiger Rand um die Umfangsschweißlinie des Beutels herum überstehen kann, meist nur wenige Millimeter oder weniger als 1 Millimeter.

Die "Folie" liegt normalerweise als eine einlagige oder mehrlagige Folienbahn vor. Gerade beim Herstellen von medizinischen Beuteln ist üblicherweise eine doppellagige Folienbahn vorhanden, welche in der Fügeanlage verarbeitet wird.

Das "Bearbeitungswerkzeug" besteht üblicherweise aus einem Oberwerkzeug und einem Unterwerkzeug, wobei eines oder beide beweglich sein können. Als die Bearbeitung sei insbesondere an eine Verschweißung gedacht, welche idealerweise direkt mit einem Trennen kombiniert sein kann. Besonders bevorzugte Ausführungsformen der Erfindung sehen ein kombiniertes Schweiß-Schneid-Werkzeug oder ein anders gestaltetes kombiniertes Schweiß-Trenn-Werkzeug vor.

Die "angetriebene Einführeinrichtung" kann zusätzlich zu dem "Greifer" noch weitere Haltemittel für die Folie aufweisen. Dies können beispielsweise weitere Greifer oder andere Mechanismen sein. Entscheidend ist, dass mit dem Antrieb ein Vorschub auf die Folie aufgebracht werden kann, welche einem Arbeitstakt entspricht. Bei geöffnetem Bearbeitungswerkzeug wird also mittels der Einführeinrichtung die Folie in Maschinenrichtung um den Vorschub vorwärts transportiert, sodass sie in dem Arbeitsbereich des Werkzeugs anhält. Wenn sich das Werkzeug um die Folie schließt, wird die Thermoformbearbeitung vorgenommen. Wenn sich das Werkzeug anschließend öffnet, kann die bearbeitete Folie in Maschinenrichtung aus dem Bearbeitungswerkzeug hinausgeführt und idealerweise gleichzeitig die neue zu bearbeitende Folie wiederum mit dem Vorschub in das geöffnete Bearbeitungswerkzeug eingeführt werden.

Der "Greifbereich" ist diejenige Fläche, welche vom Greifer während des Greifens der Folie tatsächlich bedeckt ist. So sei bei einem einfachen Ausführungsbeispiel daran gedacht, dass der Greifer einen oberen Finger und einen unteren Finger aufweist, wobei der obere Finger oberhalb der in der Regel horizontal laufenden Folie platziert wird, der untere Finger hingegen unterhalb der Folie. Werden die beiden Finger nun gegeneinander geschlossen, dann klemmen sie die Folie zwischen sich ein. Dabei decken sie einen Teil der Folie ab, nämlich genau diejenige Greiffläche auf der Oberseite der Folie, welche von dem oberen Finger bei Draufsicht normal zur Folie vom Finger verdeckt ist; bzw. für den Fall des unteren Fingers genau diejenige Greiffläche, welche vom unteren Finger bei Ansicht von unten normal zur Folie verdeckt ist. Mit anderen Worten liegen bei einem solchen Greifer gleich zwei Greifbereiche vor, nämlich ein oberer Greifbereich auf der oberen Seite der Folie und gleichzeitig ein unterer Greifbereich auf der unteren Seite der Folie. Bevorzugt sind der obere und der untere Greifbereich bei einem Greifer oder bei jedem Greifer deckungsgleich übereinander angeordnet. Wenn eine Umgebende um die tatsächlich vom Greifer auf der Folie abgedeckte Fläche größer ist als die tatsächlich abgedeckte Fläche, wie es beispielsweise bei mehrfingerigen Greifern der Fall sein kann, dann kann in einem erweiterten Betrachtungsansatz die Umgebende als der Greifbereich aufgefasst werden. In der engeren Betrachtungsweise sei als der Greifbereich aber nur der tatsächlich vom Greifer abgedeckte Bereich auf seiner Seite der Folie zu verstehen.

Die "Entfernbewegung" ist diejenige Bewegung des Greifers, welche er durchführt, während er sich von seiner ursprünglichen Position im Greifbereich so weit bewegt, dass er die Folie gerade nicht mehr bedeckt. Es versteht sich, dass im Regelfall die Bewegung des Greifers von der Folie weg über die reine hier definierte "Entfern"-Bewegung hinausgeht. Beispielsweise wird der Greifer sich üblicherweise öffnen und zum Beispiel rechtwinklig zur Maschinenrichtung in der Folienebene weg gezogen. Der erste Teil seiner Bewegung, solange er noch die Folie oben oder unten abdeckt, ist die Entfernbewegung gemäß der hiesigen Definition. Sobald er die Folie vollständig verlassen hat, also die Entfernbewegung beendet ist, setzt der Greifer aber die Bewegung in üblicherweise dieselbe Richtung weiter fort und fährt beispielsweise noch mehrere Zentimeter von der Folie fort.

Es sei daraufhingewiesen, dass der Greifer während der Entfernbewegung sich innerhalb des ursprünglichen Greifbereichs bewegen kann. Dies ist aber nicht zwingend notwendig. Vielmehr kann er sich auch beispielsweise seitlich verschieben und während einer Entfernbewegung einen Bereich der Folie überstreifen, der während des Haltens der Folie nicht zum Greifbereich gehörte.

Gemäß dem ersten Aspekt der Erfindung soll die Fügeanlage dazu eingerichtet sein, den Greifbereich zumindest teilweise einen Nutzen zuzuschlagen.

Mit anderen Worten bedeutet dies, dass zumindest ein Teil eines Greifbereichs beim Verlassen der Nutzenerzeugstation zu einem Teil des Nutzens geworden ist. Wenn also konkret ein Beutel hergestellt wird, beispielsweise ein medizinischer Beutel, dann liegt bevorzugt zumindest ein Teil des Greifbereichs innerhalb des Beutelumfangs. Mit anderen Worten umgibt also die Umfangsschweißung des Beutels zumindest einen Teil des Greifbereichs, bevorzugt sogar einen überwiegenden Teil des Greifbereichs. Alternativ oder kumulativ kann der Greifbereich zumindest teilweise einem Nutzen zugeschlagen werden, wenn eine Schweißnaht durch den vorherigen Greifbereich hindurch verläuft.

Nach einem weiteren nicht erfinderischen Aspekt ist eine Fügeanlage mit einer Bearbeitungsstation für eine Folie, mit einem öffen- und schließbaren Bearbeitungswerkzeug an der Bearbeitungsstation vorteilhaft, bei welcher die Folie in einer Maschinenrichtung durch die Fügeanlage transportiert wird und zum Einführen der Folie in das geöffnete Bearbeitungswerkzeug eine angetriebene Einfuhreinrichtung vorgesehen ist, welche einen Greifer aufweist, welcher dazu eingerichtet ist, die Folie während des Vorschubs gegriffen zu halten und sich mit einer Entfernbewegung von der Folie zu entfernen, wobei der Greifer dazu eingerichtet ist, sich längs in Maschinenrichtung von der Folie zu entfernen oder in einer Richtung, welche eine Komponente längs zur Maschinenrichtung aufweist.

Begrifflich sei an dieser Stelle erläutert, dass eine Richtung dann eine "Komponente längs in Maschinenrichtung" aufweist, wenn sich bei einer Vektorzerlegung der Entfernungsrichtung eine Komponente längs in Maschinenrichtung ergibt, wobei dreidimensional als Vektoren zur Verfügung stehen: Einerseits die Richtung "längs in Maschinenrichtung", andererseits die Richtung "senkrecht zur Maschinenrichtung und in der Folienebene" sowie schließlich eine dritte Richtung "senkrecht zur Maschinenrichtung und senkrecht zur Folienfläche".

Mit anderen Worten löst sich der Greifer nach vorne oder zumindest schräg nach vorne, wobei "nach vorne" in Maschinenrichtung bedeutet, von der Folie.

Somit ist es ermöglicht, den Greifer in einer sehr kurzen und technisch einfach zu bewerkstelligenden Bewegung von der Folie zu entfernen. Er kann sich dabei bereits geöffnet haben, also von der Folie gelöst sein oder aber noch in Berührung mit der Folie stehen, während er sich von ihr entfernt hat.

Nach einem anderen nicht erfinderischen Aspekt ist eine Fügeanlage mit einer Bearbeitungsstation für eine Folie mit einem öffen- und mit einer Schließbewegung schließbaren Bearbeitungswerkzeug an der Bearbeitungsstation von Vorteil, bei welcher die Folie in einer Maschinenrichtung durch die Fügeanlage transportiert wird und zum Einführen der Folie in das geöffnete Bearbeitungswerkzeug eine angetriebene Einführeinrichtung vorgesehen ist, welche einen Greifer aufweist, welcher dazu eingerichtet ist, die Folie während des Vorschubs gegriffen zu halten und sich mit einer Entfernbewegung von der Folie zu entfernen, wobei die Fügeanlage dazu eingerichtet ist, die Entfernbewegung des Greifers in Bezug zur Schließbewegung des Bearbeitungswerkzeugs in einer zeitlichen Abstimmung durchzuführen, welche vorsieht, dass die Schließbewegung des Bearbeitungswerkzeugs beginnt, bevor die Entfernbewegung des Greifers endet, insbesondere bevor die Entfernbewegung des Greifers beginnt.

Begrifflich sei hierzu - und auch zu den folgenden Ausführungen - erläutert, dass jeweils ein Arbeitstakt betrachtet werden soll. Sofern zwei verschiedene Bewegungen zueinander in Relation gesetzt werden, seien somit diejenigen Bewegungen gemeint, welche in einem Arbeitstakt ablaufen. Ein "Arbeitstakt" bezeichnet die Vorgänge zum Bearbeiten der Folie bis hin zum Produkt, wobei dies auch als ein Zwischenprodukt vorliegen kann.

Begrifflich sei erläutert, dass die "Schließbewegung" des Bearbeitungswerkzeugs der Hub zum Schließen des Werkzeugs sein soll. Das Bearbeitungswerkzeug ist öffen- und schließbar, wobei sich entweder eines oder beide Werkzeugteile bewegen. Im einfachsten Fall bewegt sich nur eine der beiden Werkzeughälften. In einem vergleichbar einfachen Fall bewegen sich die obere und die untere Werkzeughälfte synchron. In beiden Fällen beginnt die Schließbewegung dann, wenn sich der Abstand zwischen den beiden Werkzeughälften zu verringern beginnt.

Hinsichtlich der "Entfernbewegung" des Greifers wurde vorstehend bereits erläutert, dass die Entfernbewegung dann endet, wenn der Greifer die Folie nicht mehr überdeckt, sich mit einfachen Worten also über den Rand der Folie hinfort entfernt hat.

Der Beginn der Entfernbewegung liegt im einfachsten Falle dann vor, wenn der gesamte Vorschub mit dem Greifer an einer konstanten Position an der Folie durchgeführt wird, also mit einem über den Vorschub unveränderlichen Greifbereich.

In einem etwas komplizierter gelagerten Fall verändert sich die Lage des Greifers an der Folie während des Vorschubs: Wenn zumindest ein Teil des Vorschubs mit konstant an der Folie positioniertem Greifer durchgeführt wird, dann beginnt die Entfernbewegung des Greifers dann, wenn er von dieser ursprünglichen konstanten Position seine Entfernbewegung aufnimmt. Wenn hingegen der Greifer bereits dann in Relation zur Folie in Bewegung ist, wenn der Vorschub beginnt, dann sei der Beginn des taktgemäßen Folienvorschubs oder der tatsächliche Bewegungsbeginn des Greifers auf der Folie als der Beginn der Entfernbewegung definiert.

Mit einfachen Worten ermöglicht der andere Aspekt vorteilhafterweise, dass sich das Werkzeug schon zu schließen beginnen kann, bevor der Greifer vollständig von der Folie entfernt wurde. Dies ermöglicht es bei geeigneter Gestaltung, die erforderliche Taktzeit für die Bearbeitung der Folie zu reduzieren. Der Beginn des Werkzeugschließens muss nicht zunächst darauf warten, dass sich etwa der Greifer vollständig von der Folie entfernt hat. Vielmehr können sich die Bewegungen zumindest teilweise überlappen, um abermals die Taktzeit zu verkürzen.

Nach einem zusätzlichen nicht erfinderischen Aspekt ist auch eine Fügeanlage mit einer Bearbeitungsstation für eine Folie mit einem öffen- und mit einer Schließbewegung schließbaren Bearbeitungswerkzeug an der Bearbeitungsstation vorteilhaft, bei welcher die Folie in einer Maschinenrichtung durch die Fügeanlage transportiert wird und zum Einführen der Folie in das geöffnete Bearbeitungswerkzeug eine angetriebene Einführeinrichtung vorgesehen ist, welche einen Greifer aufweist, welcher dazu eingerichtet ist, die Folie während ihres Vorschubs gegriffen zu halten und sich mit einer Entfernbewegung von der Folie zu entfernen, wobei die Fügeanlage dazu eingerichtet ist, den Vorschub der Folie in Bezug zur Schließbewegung des Bearbeitungswerkzeugs in einer zeitlichen Abstimmung durchzuführen, welche vorsieht, dass die Schließbewegung des Bearbeitungswerkzeugs beginnt, bevor der Vorschub der Folie endet, also bevor die Folie ihre endgültige Bearbeitungsposition im Bearbeitungswerkzeug erreicht hat.

Begrifflich wurde vorstehend bereits erläutert, dass der Greifer die Folie nicht notwendigerweise während ihres gesamten Vorschubs gegriffen halten muss, um dennoch als Greifer zu dienen.

Mit einfachen Worten beginnt sich also das Bearbeitungswerkzeug schon zu schließen, hat aber seine Schließbewegung noch nicht beendet, wenn die Folie ihren Vorschub im Rahmen des Bearbeitungstakts erreicht hat.

Auch mit diesem Aspekt lässt sich die Taktzeit der Produktionsanlage reduzieren. Herkömmlich ist es demgegenüber bekannt, dass zunächst die Folie ihren Vorschub beendet, woraufhin sich das Werkzeug zu schließen beginnt. Gewissermaßen "wartet" somit das Werkzeug auf den Folienvorschub. Vorliegend wurde erkannt, dass die Wartezeit verkürzt werden kann.

Nach einem weiteren nicht erfinderischen Aspekt ist eine Fügeanlage mit einer Bearbeitungsstation für eine Folie, mit einem öffen- und schließbaren Bearbeitungswerkzeug an der Bearbeitungsstation ebenfalls von Vorteil, bei welcher die Folie in einer Maschinenrichtung durch die Fügeanlage transportiert wird und zum Einführen der Folie in das geöffnete Bearbeitungswerkzeug eine angetriebene Einführeinrichtung vorgesehen ist, welche einen Greifer aufweist, welcher dazu eingerichtet ist, die Folie während ihres Vorschubs gegriffen zu halten und sich mit einer Entfernbewegung von der Folie zu entfernen, wobei die Fügeanlage dazu eingerichtet ist, die Entfernbewegung des Greifers in Bezug zum Vorschub der Folie in einer zeitlichen Abstimmung durchzuführen, welche vorsieht, dass die Entfernbewegung des Greifers beginnt oder sogar abgeschlossen ist, bevor der Vorschub der Folie endet, also bevor die Folie ihre endgültige Bearbeitungsposition im Bearbeitungswerkzeug erreicht hat.

Auch in diesem Aspekt spiegelt sich der Grundgedanke wider, dass die einzelnen Abläufe nicht aufeinander warten müssen, sondern dass bereits ein ursprünglich anschließend beginnender Vorgang bereits beginnen kann, bevor der vorherige Vorgang abgeschlossen ist. Hier also kann der Greifer schon von der Folie heruntergehen, bevor die Folie ihren Vorschub vollendet hat.

Nach einem nochmals weiteren nicht erfinderischen Aspekt ist eine Fügeanlage mit einer Bearbeitungsstation für eine Folie mit einem öffenbaren und mit einer Schließbewegung schließbaren Bearbeitungswerkzeug an der Bearbeitungsstation zweckmäßig, bei welcher die Folie in einer Maschinenrichtung durch die Fügeanlage transportiert wird und zum Einführen der Folie in das geöffnete Bearbeitungswerkzeug eine angetriebene Einführeinrichtung vorgesehen ist, welche einen Greifer aufweist, welcher dazu eingerichtet ist, die Folie während des Vorschubs gegriffen zu halten und sich mit einer Entfernbewegung von der Folie zu entfernen, wobei die Fügeanlage dazu eingerichtet ist, die Entfernbewegung des Greifers in Bezug zur Schließbewegung des Bearbeitungswerkzeugs in einer zeitlichen Abstimmung durchzuführen, welche vorsieht, dass die Entfernbewegung des Greifers beginnt, bevor die Schließbewegung des Bearbeitungswerkzeugs endet, insbesondere bevor die Schließbewegung des Bearbeitungswerkzeugs das Bearbeitungswerkzeug mit dem Greifer kollidieren lassen würde.

Auch hier spiegelt sich wieder der Gedanke wider, dass zwei Bewegungen zumindest zum Teil in derselben Zeit ablaufen können, hier einerseits die Entfernbewegung des Greifers, andererseits die Schließbewegung des Bearbeitungswerkzeugs. Entscheidend ist hier aber, dass - obwohl beide Bewegungen zum Teil parallel ablaufen - sich der Greifer bereits von der Folie entfernt hat, wenn das Werkzeug in den Raum hinein fährt, in welchem er vorher noch war. Der Greifer ist also von der Folie bereits vollständig entfernt, wenn das Werkzeug fertig schließt.

Nach einem nächsten nicht erfinderischen Aspekt isteine Fügeanlage mit einer Bearbeitungsstation für eine Folie, mit einem öffen- und schließbaren Bearbeitungswerkzeug an der Bearbeitungsstation zweckmäßig, bei welcher die Folie in einer Maschinenrichtung durch die Fügeanlage transportiert wird und zum Einführen der Folie in das geöffnete Bearbeitungswerkzeug eine angetriebene Einführeinrichtung vorgesehen ist, welche einen Greifer aufweist, welcher dazu eingerichtet ist, die Folie während des Vorschubs gegriffen zu halten und sich mit einer Entfernbewegung von der Folie zu entfernen, und welcher weiter dazu eingerichtet ist, eine Greiferöffnebewegung durchzuführen, um zulaufende Folie nach einem Rückverfahren des Greifers gegen die Maschinenrichtung an anderer Stelle für einen neuen Vorschub mit einer neuen Greiferschließbewegung zu greifen, wobei die Fügeanlage dazu eingerichtet ist, die Greiferöffnebewegung in Bezug zur Entfernbewegung in einer zeitlichen Abstimmung durchzuführen, welche vorsieht, dass die Greiferöffnebewegung später als die Entfernbewegung beginnt und/oder endet.

Begrifflich sei zu diesem nächsten Aspekt erläutert, dass sich der Greifer mit jedem Maschinentakt einmal öffnet und einmal schließt. Er öffnet sich, um die neue Folie zum Hineinführen in das Werkzeug greifen zu können; und er schließt sich, um die Folie tatsächlich zu greifen. Es gibt also eine maximal geöffnete Position des Greifers und eine vollkommen geschlossene Position des Greifers, wobei die geschlossene Position immer noch Platz für die Folie zwischen zwei Greiferbacken lässt, auch wenn diese im Normalfall federnd überdrückt sein werden.

Wenn die Greiferöffnebewegung später als die Entfernbewegung endet, spiegelt sich derselbe Gedanke wider: Es können mehrere Greiferverfahrbewegungen durchgeführt werden, insbesondere das Entfernen des Greifers von der Folie und auch das Zurückfahren des Greifers gegen die Maschinenrichtung, bevor seine Öffnebewegung letztendlich abgeschlossen ist.

Wenn die Greiferöffnebewegung später beginnt als die Entfernbewegung, dann führt dies dazu, dass der Greifer in geschlossenem Zustand ein Stück entlang der Folie gezogen wird oder sogar vollständig von der Folie abgestreift wird, bevor er geöffnet wird.

In einer bevorzugten Ausführungsform lässt sich beispielsweise vorstellen, dass der Greifer zunächst geschlossen bleibt und in dieser Haltung von der Folie abgestreift wird, sodass die Entfernbewegung des Greifers von der Folie bereits abgeschlossen ist, bevor die Öffnebewegung des Greifers bereits beginnt. Durch das Abstreifen des noch geschlossenen Greifers von der Folie kann bereits ein möglichst großer Weg der Greiferentfernbewegung zurückgelegt werden, ohne dass die Folie an Stabilität in ihrer Führung verliert, insbesondere wenn zwei Greifer an der Folie angreifen, also einer an der rechten Seite und einer an der gegenüberliegenden linken Seite, und beide ihre Bewegungen entgegengesetzt und synchron vollziehen.

In diesem Zusammenhang sei erläutert, dass im Rahmen der hier vorliegenden Patentanmeldung generell das Verwenden von unbestimmten Artikeln "ein", "zwei" usw. immer als Mindestens-Angaben zu verstehen sind, sofern sich nicht aus dem jeweiligen Kontext ergibt, dass etwa dort nur "genau ein", "genau zwei" usw. gemeint ist.

Generell wird es als Vorteil erachtet, wenn die Fügeanlage dazu eingerichtet ist, den Greifer mit einer streifenden Abziehbewegung von der Folie zu entfernen, und zwar senkrecht zur Maschinenrichtung, schräg zur Maschinenrichtung und/oder längs in Maschinenrichtung. Bevorzugt erfolgt die Bewegung in der Ebene der Folie. Wenn die Fügeanlage dazu eingerichtet ist, die Greiferöffnebewegung erst dann zu beginnen oder jedenfalls ihren wesentlichen - somit überwiegenden - Hub durchführen zu lassen, wenn die Entfernbewegung bereits beendet ist, dann rutscht der Greifer von der Folie. Ein solches Timing hält den Greifer während seiner gesamten Zeit auf der Folie so kompakt wie möglich. Insbesondere ist idealerweise noch keine Öffnebewegung erfolgt, welche entgegen die Werkzeugschließrichtung den Greifer bewegt hätte, also bei einer horizontal liegenden Folie nach oben oder nach unten. Andersherum kann das sich schließende Werkzeug bereits möglichst nah an die Folie heranfahren, obwohl sich der Greifer noch im Greifbereich auf der Folie befindet.

Es sei ausdrücklich darauf hingewiesen, dass sich die vorstehenden Aspekte beliebig und mit Vorteil miteinander kombinieren lassen.

Die Bearbeitungsstation ist bevorzugt als eine Schweiß-Station ausgebildet, insbesondere mit einem kombinierten Schweiß-Trenn-Werkzeug, wobei das Schweiß-Trenn-Werkzeug beispielsweise als ein Schweiß-Schneid-Werkzeug ausgeführt sein kann. Solche Werkzeuge sind sehr gut dazu geeignet, idealerweise in einem einzigen Arbeitsgang nicht nur mehrere Folienlagen zu verbinden, sondern sogleich zu Einzelnutzen zu trennen oder das Trennen zumindest vorzubereiten. Dies ist besonders bei der Anwendung für medizinische Beutel relevant, denn entsprechende Anlagen bekommen mehrere Folienlagen, normalerweise zwei Folienlagen, zugeführt. In einem einzigen Werkzeug können diese miteinander zu der Beutelform in Umfangsreichrichtung verschweißt werden und anschließend zu einzelnen fertigen Beuteln geschnitten oder beispielsweise gestanzt werden.

Wenn mehrere Folienlagen in das Bearbeitungswerkzeug eingezogen werden, greift bevorzugt ein Greifer mehrere Folienlagen, insbesondere alle Folienlagen. Alternativ wäre denkbar, dass mehrere Greifer vorhanden sind, welche unterschiedliche Folienlagen in das Bearbeitungswerkzeug hineinziehen.

Bevorzugt ist die Fügeanlage dazu eingerichtet, den Greifer in einer Folienebene von der Folie zu lösen. Dies wurde vorstehend bereits erläutert.

Die Greiferöffnebewegung kann mehrstufig durchgeführt werden.

Es wird vorgeschlagen, dass ein Greifer zum Greifen eines Seitenrahmens der Folie angeordnet ist, bevorzugt neben dem Seitenrand und auf dessen Höhe. Es versteht sich, dass bei mehreren Folien, welche bereits übereinander liegen, der Greifer neben dem Seitenrand mehrerer oder sogar aller Folien und auf deren Höhe angeordnet sein kann. Wenn die Greifer an einem Seitenrand der Folie angreifen, können sie mit besonders kurzen Hüben aus dem für die Bearbeitung durch das Bearbeitungswerkzeug notwendigen Raum herausgefahren werden und sich entgegen der Maschinenrichtung am bevorzugt geschlossenen Bearbeitungswerkzeug vorbei zurückbewegen, um für den nächsten Hub die Folie zu greifen.

Bevorzugt sind zwei Greifer oder mehr Greifer vorgesehen, welche gegenüberliegend an den Seitenrändern zum Greifen der Folie angeordnet sind. Auf diese Weise wird die Folie sicher auf beiden Seiten gehalten und die Kräfte, welche von den Greifern auf die Folie ausgeübt werden, wirken spiegelsymmetrisch um die Maschinenrichtung herum. wenn beispielsweise die Greifer im noch geschlossenen Zustand seitlich von der Folie abgestreift werden, im einfachsten Beispiel also rechtwinklig zur Maschinenrichtung, dann heben sich die Zugkräfte gegenseitig auf, welche von den Greifern mittels Haftreibung und später mittels Gleitreibung auf die Folie ausgeübt werden.

Es empfiehlt sich, dass ein hinterer Haltemechanismus vorgesehen ist, welcher dazu eingerichtet ist, die Folie beim Einführen in das Bearbeitungswerkzeug in einem Bereich hinter einem Bearbeitungsbereich zu halten, also im Bezug zum Greifer gegen die Maschinenrichtung versetzt.

Begrifflich sei hierzu erläutert, dass unter der Anordnung "hinter" im Bearbeitungsbereich diejenigen Bereiche gemeint sind, aus welchen die Folie hinaus in das Bearbeitungswerkzeug transportiert wird, und zwar mit dem designierten Bearbeitungsbereich des gerade betrachteten Werkzeugtaktes. Konstruktiv kann dort als der hintere Haltemechanismus ins besondere eine Haltezange zum Einsatz kommen. Der hintere Haltemechanismus kann besonders leicht einen Abreißhub durchführen, wenn er sich bei gehaltener für den nächsten Takt nachzuschiebender Folie ein kleines Stück gegen die Maschinenrichtung bewegt, beispielsweise 1 cm bis 3 cm, während das Bearbeitungswerkzeug noch geschlossen ist.

Hierzu wird vorgeschlagen, dass die Haltezange einen Abreißhubgeber aufweist, um die Haltezange bevorzugt bei geschlossenem Bearbeitungswerkzeug gegen die Maschinenrichtung zu bewegen.

Es wurde bereits erwähnt, dass der Greifer dazu eingerichtet sein kann, während des geschlossenen Bearbeitungswerkzeugs außerhalb des Bearbeitungswerkzeugs gegen die Maschinenrichtung verfahren zu werden, um dort für einen Folgetakt erneut Folie zu greifen.

Stattdessen oder ergänzend kann es auch von Vorteil sein, wenn der Greifer dazu eingerichtet ist, während des sich schließenden Bearbeitungswerkzeugs und/oder innerhalb des Bearbeitungswerkzeugs gegen die Maschinenrichtung verfahren zu werden. Beispielsweise lässt sich denken, dass der Greifer während des sich schließenden Bearbeitungswerkzeugs innerhalb der Fläche zwischen den noch geöffneten, sich aufeinanderzu bewegenden Werkzeughälften verfahren wird, beispielsweise indem der Greifer geöffnet und sofort gegen die Maschinenrichtung verfahren wird, wobei er parallel zur Maschinenrichtung über die Folienränder streift. Bei einer solchen Einrichtung sollte dafür gesorgt werden, dass die Folie an ihrer Stirnseite gehalten wird. Dazu kann ein Halter aus dem Werkzeug herausfahren und/oder diesem vorauseilen.

Wenn der Greifer dazu eingerichtet ist, die Folie an einer vorderen Position zu greifen, sodass er einem überwiegenden Teil der Folie beim Vorschub in das Bearbeitungswerkzeug vorausläuft, ist die Folie bestmöglich in jede erforderliche Richtung gespannt, und ein Durchhängen der Folie kann weitestmöglich vermieden werden. In diesem Zusammenhang ist von dem überwiegenden Teil der "Folie" die Rede, wobei hier im Kontext diejenige Folie gemeint ist, die mit dem jeweiligen Maschinentakt bearbeitet werden soll.

In einer bevorzugten Ausführungsform ist der Greifer an einem in Maschinenrichtung angetriebenen vorschiebbaren Vorschubgestell angeordnet, wobei der Greifer gegenüber dem Vorschubgestell einen Relativhubgeber aufweist, mittels welchem der Greifer um einen Relativhub zum Entfernen von der Folie relativ bewegbar ist.

Begrifflich sei hierzu erläutert, dass das Vorschubgestell zwar in Maschinenrichtung arbeiten soll, dass der "Relativhub" allerdings nicht in Maschinenrichtung erfolgen muss. Bevorzugt wird der Relativhub zwar in Maschinenrichtung ausgeführt, jedenfalls in eine Richtung, welche eine Komponente parallel zur Maschinenrichtung aufweist. Es ist aber ohne weiteres auch ein Relativhub senkrecht zur Maschinenrichtung denkbar, in beiden Fällen insbesondere parallel zur Folienebene.

Gerade innerhalb eines Sortiments mit mehreren verschiedenen Fügeanlagentypen lässt sich ein Relativhubgeber am Greifer besonders leicht modulartig zu einem Vorschubgestell ergänzen. Auch kann ein- und dasselbe Vorschubgestell Verwendung finden, egal wie im jeweiligen Anwendungsfall der Relativhub durchgeführt werden soll.

Es wurde bereits erläutert, dass der Greifer eine Feder aufweisen kann, insbesondere eine Blattfeder. Die Steuerung für den Greifer ist besonders einfach, wenn er die Folie einfach durch ein Zufahren bis zum vollständigen Schließen des Greifers greifen kann. Zwei Greiferteile, welche auf verschiedenen Seiten der Folie liegen, sind dann mit einer Vorspannung gegeneinander gerichtet. Um die Folie nicht zu schädigen, kann bevorzugt die Feder zum Einsatz kommen.

In diesem Zusammenhang sei daraufhingewiesen, dass unter einem "Steuerung" im Rahmen der hier vorliegenden Patentanmeldung auch dann gesprochen werden soll, wenn technisch eine "Regelung" vorliegt, wenn also ein Abgleich der Soll-Werte mit tatsächlich gemessenen Ist-Werten erfolgt. Die Regelung sei als implizit immer miterfasste Insbesondere-Konstruktion und Untermenge der Steuerung verstanden.

Eine Fügeanlage der hier in der Anmeldung beschriebenen Art kann insbesondere eingerichtet sein zum Herstellen und gegebenenfalls Befüllen eines Beutels für medizinische Zwecke. So sei als Gattung insbesondere eine Anlage wie in der DE 10 2010 050 136 A1 veröffentlicht verwendet.

Die Erfindung sieht vor, dass die Fügeanlage dazu eingerichtet ist, über einen Greifbereich hinüber, also durch den Greifbereich hindurch, und/oder um den Greifbereich herum die Folie zu bearbeiten, und zwar bevorzugt ohne einen zu Abfallgitter werdenden Greifbereich, in welchem der Greifer positioniert war.

Dieser Aspekt wurde eingangs bereits angesprochen. Wenn eine Bearbeitungsnaht, beispielsweise eine Schweißnaht, über den Greifbereich hinüber geht und diesen damit zweiteilt, oder wenn die Schweißnaht um zumindest einen Teil des Greifbereichs herumführt, insbesondere im Falle einer Umfangsschweißung für einen Beutel, dann wird ein Teil des Greifbereichs oder sogar der gesamte Greifbereich , in welchem der Greifer positioniert war, nun zu einem Teil, der den eigentlichen Beutel innerhalb dessen Umfangs formt. Auf diese Weise kann Abfall reduziert werden. Bei geeigneter Einstellung kann sogar vollständig frei von Abfall produziert werden.

Gemäß einem verfahrensmäßigen Aspekt der Erfindung löst die gestellte Aufgabe ein Verfahren zum Herstellen eines Zwischen- oder Endprodukts nach dem Anspruch 13.

Bevorzugt wird das Verfahren so eingesetzt, dass von der Bearbeitungsstation bis zu einer weiteren Station abfallfrei gefahren wird, indem über einen Greifbereich hinüber oder um einen Greifbereich herum bearbeitet wird, bevorzugt eine Schweißnaht gesetzt wird.

Es versteht sich, dass zu einem solchen Verfahren eine Fügeanlage wie vorstehend beschrieben eingesetzt wird.

Die Erfindung wird nachstehend anhand von Ausführungsbeispielen unter Bezugnahme auf die Zeichnung näher erläutert. Dort zeigen
- Figur 1: schematisch in einer Draufsicht ein Folienband mit zwei in Maschinenrichtung abzuziehenden Greifern,
- Figur 2: schematisch in einer Draufsicht wie in Figur 1 ein Folienband mit zwei quer zur Maschinenrichtung abzuziehenden Greifern,
- Figur 3: schematisch in einer Stirnansicht gegen die Maschinenrichtung ein Folienband in einer Schweißstation mit einem zweiteiligen Schweißwerkzeug mit einem horizontal liegenden ersten und einem vertikal stehenden zweiten Greifer,
- Figur 4: in der Ansicht aus Figur 3 die beiden Greifer aus dem nun geschlossenen Werkzeug herausgefahren,
- Figur 5: schematisch in einer Draufsicht ein Transportsystem mit einer Vorschubzange und einem Greiferpaar an einer Beutelschweiß- und -befüllanlage in einer Grundstellung beim Greifen von Folie,
- Figur 6: das Transportsystem aus Figur 5 mit vorgeschobener Vorschubzange und Folie,
- Figur 7: das Transportsystem aus den Figuren 5 und 6 beim Ausführen eines Zusatzhubs mit der Vorschubzange zum Abstreifen des Greiferpaares von der Folie,
- Figur 8: das Transportsystem aus den Figuren 5 bis 7 beim Rückfahren der Vorschubzange und
- Figur 9: das Transportsystem aus den Figuren 5 bis 8 beim Ausführen eines Abreißhubs.

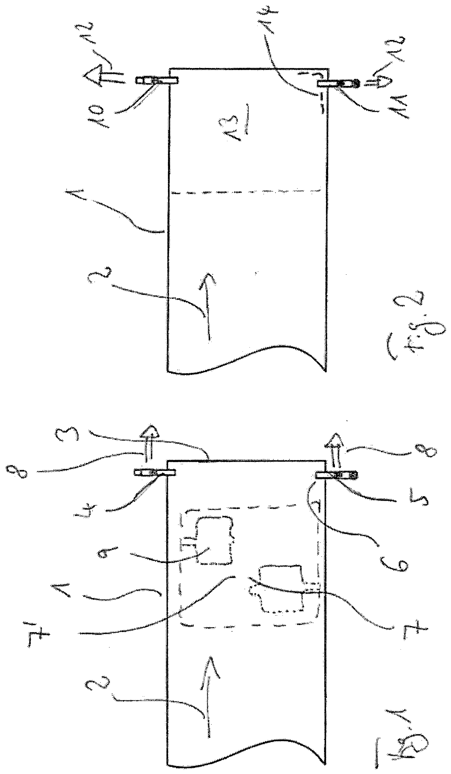

Das Folienband 1 in Figur 1 ist in ein Folienvorschubsystem (nicht dargestellt) eingeführt und dazu vorgesehen, durch eine Anlage (nicht dargestellt) zum Verschweißen und Befüllen von medizinischen Beuteln in einer Maschinenrichtung 2 transportiert zu werden. In Maschinenrichtung 2 vorn befindet sich eine vom vorherigen Arbeitstakt abgetrennte Stirnkante 3. Aus der Maschinenrichtung 2 kommend setzt sich das Folienband 1 als Endlosband in der Zuführung fort.

Um das Folienband 1 in Maschinenrichtung 2 sicher transportieren zu können, sind ein linker Greifer 4 und ein rechter Greifer 5 am Folienvorschubsystem vorgesehen. Sowohl der linke Greifer 4 als auch der rechte Greifer 5 weisen jeweils zwei Finger 6 (exemplarisch gekennzeichnet) auf. Jeweils ein oberer Finger liegt exakt oberhalb eines unteren Fingers, sodass sowohl der linke Greifer 4 als auch der rechte Greifer 5 jeweils zweifingerig gestaltet sind.

Das Folienvorschubsystem ist mit dem linken Greifer 4 und dem rechten Greifer 5 dazu eingerichtet, die zulaufende Folie für den nächsten Prozesstakt weit vorn am designierten Arbeitsbereich 7 zu greifen, also demjenigen Bereich, welcher tatsächlich in ein Werkzeug hineingezogen werden soll, beispielsweise in ein kombiniertes Schweiß-Trenn-Werkzeug. Dazu greifen sowohl der linke Greifer 4 als auch der rechte Greifer 5 nahe der Stirnkante 3 an das Folienband 1. Die beiden Greifer 4, 5 eilen somit in Maschinenrichtung 2 während des Vorschubs zum Einbringen des Folienbands 1 in das Werkzeug jedenfalls einem überwiegenden Teil des Arbeitsbereichs 7 voraus, je nach Gestaltung können sie auch dem gesamten Arbeitsbereich 7 vorauseilen, wie in Figur 1 dargestellt ist.

Nach dem Vollenden des Vorschubs des Folienbands 1, konkret des Arbeitsbereichs 7, in das Werkzeug hinein führen der linke Greifer 4 und der rechte Greifer 5 zeitgleich einen Zusatzhub 8 in Maschinenrichtung durch, ohne vorher ihre unter Vorspannung gegeneinander stehenden Finger 6 geöffnet zu haben. Durch den Zusatzhub 8 werden die Greifbereiche freigegeben, also diejenigen Bereiche, in welchen sich die Finger 6 und das Folienband 1 während des Vorschubs des Folienbands 1 überlappten.

Mit anderen Worten werden der linke Greifer 4 und der rechte Greifer 5 in Folienvorschubrichtung und in Maschinenrichtung vom Folienband 1 abgezogen.

Während des Ausführens des Zusatzhubs 8 üben der linke Greifer 4 und der rechte Greifer 5 eine nochmals das Folienband 1 in Längsrichtung spannende Kraft auf das Folienband 1 aus, welches zur Planlage des Folienbands 1 im Werkzeug beiträgt. Um das Folienband 1 und insbesondere den Arbeitsbereich 7 trotz der entfernten Greifer 4, 5 präzise im Werkzeug platzieren zu können, kann beispielsweise ein Hilfshalter (nicht dargestellt) vorgesehen sein. Der Hilfshalter kann beispielsweise vom Werkzeug oder von der Anlage außerhalb des Werkzeugs an die Folie herangefahren werden und in einer platzsparenden Konstruktionsweise ein Stift oder ein Stiftepaar sein, welches aus dem Werkzeug der Werkzeugbewegung vorauseilt und das Halten der Folie übernimmt, während sich das Werkzeug schließt.

Werden beispielsweise zwei Einzelnutzen 9 (exemplarisch gekennzeichnet) im Werkzeug umfangsverschweißt, so kann ohne Weiteres ein vorauseilender Haltestift aus dem Werkzeug auf das dazwischen liegende, designierte Abfallgitter 10 herabfahren und so für eine sichere Platzierung des Arbeitsbereichs 7 im Werkzeug sorgen.

In einer alternativen Ausführungsform, dargestellt in Figur 2, fahren zwei Greifer 10, 11 ebenfalls mit einem Zusatzhub 12 vom Folienband 1 herunter, in dieser Ausführungsform allerdings quer zur Maschinenrichtung 2 und in der Ebene des Folienbands 2.

Beim Abziehen der Greifer 10, 11 quer zur Folienvorschubrichtung und zur Maschinenrichtung 2 wird das Folienband 1 nochmals gespannt, insbesondere der großflächige Arbeitsbereich 13 quer zur Maschinenrichtung 2.

Wenn sich Greifer quer zur Maschinenrichtung abziehen, also beispielsweise in eine Zusatzhubrichtung, welche sich aus einer vektoriellen Addition der Zusatzhübe 8, 12 der beiden dargestellten Ausführungsbeispiele ergäbe, wird das Folienband in Längs- und Querrichtung glatt gezogen. Anisotropien der Folie kann über entsprechende Winkel bei der Abziehbewegung begegnet werden.

Beim Ausführungsbeispiel in Figur 2 wird, unabhängig von der Abziehrichtung der Greifer 10, 11, abfallfrei produziert. Es fällt kein Abfallgitter an.

Dazu ist das Folienband 1 so wenig größer als die letztendlichen Nutzen dimensioniert, dass eine Umfangsschweißung 14 bis auf wenige Millimeter an den Rand der Folienbahn 1 und somit des großflächigen Arbeitsbereichs 13 heran gelegt wird.

Zwar liegt während des Folienvorschubs mindestens ein Finger der Greifer 10, 11 mit seinem Greifbereich innerhalb der designierten Lage der Umfangsschweißung 14. Während sich das Schweißwerkzeug zum Schweißen des Beutelumfangs schließt, führen aber die Greifer 10, 11 ihren Zusatzhub 12 aus und geben somit rechtzeitig vor dem Schließen des Schweißwerkzeugs den gesamten großflächigen Arbeitsbereich 13 frei, somit insbesondere die designierte Position für die Umfangsschweißung 14.

Auch bei einer solchen Vorgehensweise kann mittels eines Hilfshalters die Folienbahn 1 im Werkzeug vor dessen Schließen stabilisiert werden.

Wenn ohne Abfall produziert werden soll, wird vorgeschlagen, dass sich der Hilfshalter vom Werkzeug innerhalb des großflächigen Arbeitsbereichs 13 zur Folienbahn 1 bewegt, bevorzugt mit einem vorauseilenden Haltefinger. Dieser kommt idealerweise nicht auf einer vorgesehenen Schweißnaht zum Liegen, sondern in den großflächig zur Auswahl stehenden Innenbereichen innerhalb der designierten Schweißnähte.

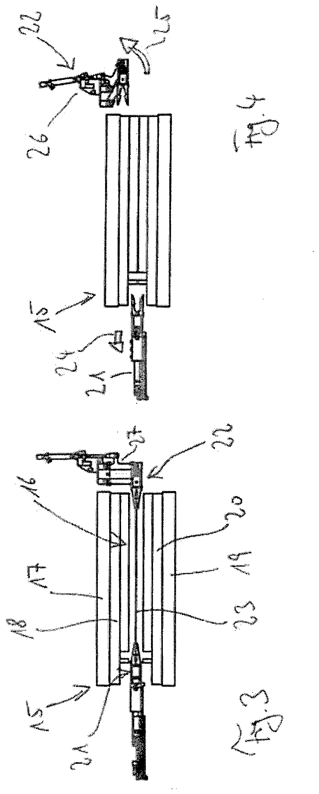

Die Schweißstation 15 in den Figuren 3 und 4 trägt ein kombiniertes Schweiß-Trenn-Werkzeug 16. An einem Obertisch 17 ist eine obere Werkzeughälfte 18 angebracht. An einem Untertisch 19 wird ein Unterwerkzeug 20 getragen.

Sowohl der Obertisch 17 als auch der Untertisch 19 sind vertikal verfahrbar. Zum Öffnen fährt der Obertisch 17 nach oben, der Untertisch 19 hingegen nach unten. Zum Schließen des kombinierten Schweiß-Trenn-Werkzeugs hingegen fährt der Obertisch 17 von seiner obersten Position (nicht dargestellt) in seine unterste Position (vgl. Figur 4), der Untertisch 19 fährt von seiner untersten Position (nicht dargestellt) in seine oberste Position (vgl. Figur 4).

Ein erster Greifer 21 und ein zweiter Greifer 22 halten ein Folienband 23, welches sie gerade in das kombinierte Schweiß-Trenn-Werkzeug 16 hineinziehen oder hineingezogen haben.

Noch während das kombinierte Schweiß-Trenn-Werkzeug seine Schließbewegung ausführt, führen der erste Greifer 21 und der zweite Greifer 22 einen Zusatzhub 24, 25 aus. Der Zusatzhub 24 des ersten Greifers 21 erfolgt durch ein horizontales Herausziehen des ersten Greifers 21 senkrecht zur Maschinenrichtung.

Der Zusatzhub 25 des zweiten Greifers 22 hingegen vollzieht eine Schwenkbewegung, senkrecht zur Maschinenrichtung, aber aus der Folienebene hinweg nach oben verschwenkend. Dazu sind an seinem Greiferhalter 26 zwei Schwenkkulissenstege 27 vorgesehen. Außerdem ist dort ein Antrieb (nicht dargestellt) angeordnet.

Der erste Greifer 21 kann in ebensolcher Weise konstruiert sein, aber horizontal liegend angeordnet und daher in Figur 4 nicht weiter im Detail erkennbar. Alternativ kann der erste Greifer 21 beispielsweise einfach eine Linearbewegung in der Folienebene und senkrecht zur Maschinenrichtung durchführen, beispielsweise mit einem einfachen Hubzylinder.

Sowohl der erste Greifer 21 als auch der zweite Greifer 22 befinden sich zum Zeitpunkt des geschlossenen Schweiß-Trenn-Werkzeugs 16 entweder komplett seitlich des Werkzeugs (zweiter Greifer 22) oder in einer Aussparung innerhalb des Schweiß-Trenn-Werkzeugs 16, welche sich entlang der Maschinenrichtung erstreckt. Sowohl der erste Greifer 21 als auch der zweite Greifer 22 können daher noch während des geschlossenen kombinierten Schweiß-Trenn-Werkzeugs gegen die Maschinenrichtung zurückverfahren werden, um das Folienband für den nächsten Folienvorschub im nächsten Arbeitstakt zu greifen.

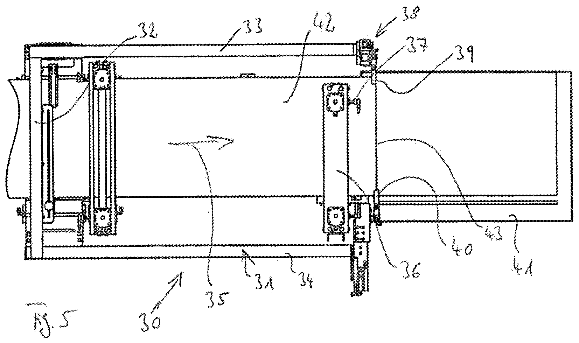

Das Transportsystem 30 in den Figuren 5 bis 9 besteht im Wesentlichen aus einer angetriebenen Vorschubzange 31. Die Vorschubzange 31 weist eine Traverse 32 und zwei lange Holme 33, 34 auf, wobei sich die beiden Holme 33, 34 parallel zur Maschinenrichtung 35 erstrecken.

An einem Maschinenrahmen (nicht im Einzelnen dargestellt) ist eine Haltezange 36 vorgesehen. Diese ist im Wesentlichen ortsfest und nur mit einem wenige Zentimeter kurzen Gegenrichtungshubzylinder 37 beweglich am Maschinenrahmen angeordnet.

Die beiden Holme 33, 34 der Vorschubzange 31 tragen an ihren Stirnenden 38 jeweils einen zweifingerigen Greifer, somit einen linken Greifer 39 und einen rechten Greifer 40.

Weiter in Maschinenrichtung der Haltezange 36 befindet sich ein Werkzeuguntertisch 41. Der Werkzeuguntertisch trägt ein Unterwerkzeug (nicht dargestellt) eines kombinierten Schweiß-Trenn-Werkzeugs.

Eingelegt in das Transportsystem 30 und gegriffen bei den beiden Greifern 39, 40, ist eine Folienbahn 42. Eine Stirnkante 43 der Folienbahn 42 liegt genau mit ihrer Grenze an den zweifingerigen Greifern 39, 40.

Im Betrieb der Anlage und somit des Transportsystems 30 zeigt die Figur 5 eine Grundstellung, in welcher die beiden Greifer 39, 40 gegen die Maschinenrichtung 35 verfahren sind und die zugeführte Folienbahn 42 an ihrer Stirnkante 43 gerade gegriffen haben.

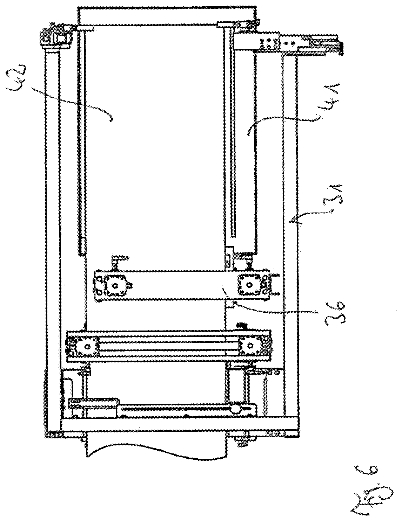

In der in Figur 6 dargestellten Position ist die Vorschubzange 31 nach vorn verfahren, also in Maschinenrichtung 35. Zu erkennen ist dies am besten daran, dass sich die beiden Greifer 39, 40 in Maschinenrichtung von der Haltezange 36 entfernt haben, während die Haltezange 36 ortsfest geblieben ist.

Beim Ausführen dieses Vorschubs und somit eines Arbeitstakts der Anlage haben der linke Greifer 39 und der rechte Greifer 40 mit identischem Vorschub die Folienbahn 42 in das kombinierte Schweiß-Trenn-Werkzeug hineingezogen und somit die Folienbahn 42 über den Werkzeuguntertisch 41 gezogen.

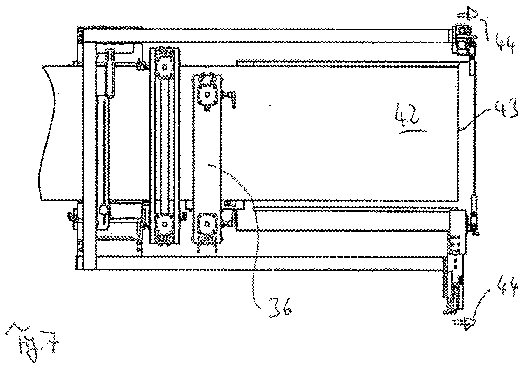

Bei dem in Figur 7 dargestelltem Arbeitsschritt führen der linke Greifer 39 und der rechte Greifer 40 zeitlich und streckenmäßig synchron einen Zusatzhub 44 aus. Dabei streifen sie sich über die Stirnkante 43 der Folienbahn 42 hinweg in Maschinenrichtung und entfernen sich somit vollständig von der Folienbahn 42.

Sobald die Greifer 39, 40 die Oberfläche der Folienbahn 42 im Arbeitsbereich verlassen haben, schließt sich das Werkzeug. Idealerweise wird die Geometrie der Einzelnutzen so gelegt, dass die Verschweißungen abfallfrei durchgeführt werden. In einer bevorzugten Ausführungsform werden medizinische Beutel so zueinander angeordnet, dass zwischen ihnen nur ein so geringer Streifen verbleibt und dass um ihre Umfangsschweißungen herum nur ein so geringer Umfangsstreifen verbleibt, dass kein Abfallgitter mehr herausgestanzt und dem Abfall zugeführt werden muss. Insbesondere können - weil sich die Greifer nicht mehr auf der Folie befinden - die Schweißnähte bis praktisch direkt an den Rand der Folienbahn 42 heranreichen.

Wenn medizinische Beutel hergestellt werden, ist idealerweise bereits in einem vorherigen Schritt an einer Portstation ein Röhrchen oder eine Mehrzahl von Röhrchen an den designierten Beutelumfängen vorgeschweißt wurden. Mit vollendeter Beutelumfangsschweißung können die Beutel über einen noch im oder am angreifenden Greifer, beispielsweise über eine Zentralelektrode oder über einen anderen, von außen oder von innen klemmenden Greifer, gehalten werden. Denn die Beutel sind zu diesem Zeitpunkt noch nicht gefüllt und haben daher recht wenig Masse.

Somit kann das kombinierte Schweiß-Trenn-Werkzeug nicht nur eine Schwächung in der Folienbahn hervorrufen, welche später zu einer Trennung in Einzelnutzen weiterverwendet werden kann; vielmehr kann sogleich ein vollständiges Durchtrennen erfolgen, welches die Beutel auf den Beutelgreifern weitertransportieren lässt. Ein geeignetes System hierfür ist beispielsweise der WO 2012/006 980 A2 zu entnehmen.

Während der Bearbeitung im Werkzeug wird die Folienbahn 42 idealerweise von der Haltezange 36 gehalten.

Es wurde bereits darauf hingewiesen, dass die Folienbahn 42 nach dem Abstreifen der beiden Greifer 39, 40 anderweitig temporär gehalten werden kann, beispielsweise von einem Haltemittel, welches am Werkzeug befestigt ist und diesem vorauseilen kann.

Nach dem Entfernen der Greifer 39, 40 von der Folienbahn 42 oder zumindest teilweise mit dieser Bewegung überlappend, werden die beiden Greifer 39, 40 vom Werkzeug räumlich freigestellt: Der linke Greifer 39 wird mit einer Schwenkbewegung eines am Holm 33 befindlichen Antriebs vollständig von einem Bereich zwischen den Werkzeugtischen herausgezogen.

Der rechte Greifer 40 wird demgegenüber mittels eines linearen weiteren Zusatzhubs senkrecht zur Maschinenrichtung aus den Grenzen des Werkzeugs herausgefahren, bleibt aber im hier dargestellten Beispiel noch oberhalb des Werkzeuguntertisches, wobei auch dies nicht zwingend sein muss.

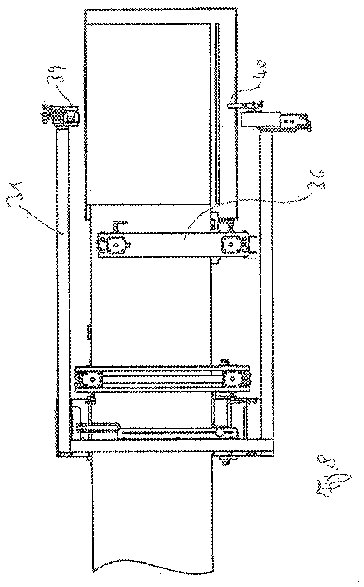

In der freigestellten Position der Figur 8 befindet sich die Vorschubzange 31 bereits auf ihrem Rückweg in die Maschinenrichtung, am besten daran zu erkennen, dass die beiden Stirnenden 38 der Holme 33, 34 sich bereits der Haltezange 36 angenähert haben, während die Haltezange 36 nach wie vor ortsfest ist.

Es sei daraufhingewiesen, dass im hier vorgestellten Beispiel die Zusatzhübe der Greifer 39, 40 bei feststehenden Holmen 33, 34 und insgesamt feststehender Vorschubzange 31 durchgeführt werden können. Dazu sind zwei separate, lokale Antriebe für die Greifer erforderlich. Dies hat den Vorteil, dass auch bestehende Anlagen an ihrer Vorschubzange eine einfache Nachrüstung erfahren können, indem einfach an den Holmen der Vorschubzange der Zusatzhubgeber angebracht wird.

Alternativ lässt sich auch denken, dass die gesamte Vorschubzange oder Teile davon einen Zusatzhub oder mehrere Zusatzhübe ausführen können.

Die in Figur 8 dargestellte Rückfahrbewegung kann bereits erfolgen, während das Werkzeug noch geschlossen ist, um Taktzeit einzusparen. Dies ist in der EP 1 780 000 B1 näher erläutert.

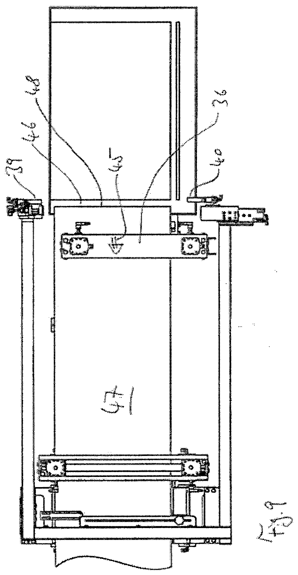

In der in Figur 9 dargestellten Phase sind die Greifer 39, 40 noch in Bewegung und somit in ihrer freigestellten Position, haben aber schon wieder die Grundstellung aus Figur 5 erreicht. Nun führt allerdings die Haltezange 36 einen Abreißhub 45 von beispielsweise 10 mm bis 25 mm durch, während das Werkzeug noch geschlossen ist. Dies reißt einen Abstand 46 zwischen die bereits bearbeitete Fläche der Folienbahn 42 und die nachlaufende Folienbahn 47.

Die bereits bearbeitete Fläche kann in der Anlage weitertransportiert werden, beispielsweise zu weiteren Stationen, wie zum Beispiel einer Befüllstation oder - je nach Ausgestaltung - einer Stanzstation für ein Abfallgitter.

Die Haltezange 36 fährt anschließend wieder um das Maß des Abreißhubs 45 in Maschinenrichtung nach vorne und bringt somit die Stirnkante 48 der nachlaufenden Folienbahn 47 in die Ursprungsposition, sodass die beiden Greifer 39, 40 ihre Freistellung von der Anlage aufgeben können und wieder heranfahren können, wobei sie die nachlaufende Folienbahn 47 greifen. Damit ist ein Arbeitstakt vollendet.

### Bezugszeichen

- 1: Folienband
- 2: Maschinenrichtung
- 3: Stirnkante
- 4: Linker Greifer
- 5: Rechter Greifer
- 6: Finger
- 7: Arbeitsbereich
- 7': Abfallgitter
- 8: Zusatzhub
- 9: Einzelnutzen
- 10: Greifer
- 11: Greifer
- 12: Zusatzhub
- 13: Großflächiger Arbeitsbereich
- 14: Umfangsschweißung
- 15: Schweißstation
- 16: Kombiniertes Schweiß-Trenn-Werkzeug
- 17: Obertisch
- 18: Oberwerkzeug
- 19: Untertisch
- 20: Unterwerkzeug
- 21: Erster Greifer
- 22: Zweiter Greifer
- 23: Folienband
- 24: Zusatzhub
- 25: Zusatzhub
- 26: Greiferhalter
- 27: Schwenkstege
- 30: Transportsystem
- 31: Vorschubzange
- 32: Traverse
- 33: Holm
- 34: Holm
- 35: Maschinenrichtung
- 36: Haltezange
- 37: Gegenrichtungshubzylinder
- 38: Stirnende des Holms
- 39: Linker Greifer
- 40: Rechter Greifer
- 41: Werkzeuguntertisch
- 42: Folienbahn
- 43: Stirnkante
- 44: Zusatzhub
- 45: Abreißhub
- 46: Abstand
- 47: Nachlaufende Folienbahn
- 48: Stirnkante der nachlaufenden Folienbahn

## Patentansprüche

1. Fügeanlage,
eingerichtet zum Herstellen eines Beutels für medizinische Zwecke,
mit einer Nutzenerzeugstation für eine Folie, mit einem öffen- und schließbaren Bearbeitungswerkzeug an der Nutzenerzeugstation, wobei die Folie in einer Maschinenrichtung (2,35) durch die Fügeanlage transportiert wird und zum Einführen der Folie in das geöffnete Bearbeitungswerkzeug eine angetriebene Einführeinrichtung vorgesehen ist, welche einen Greifer (4, 5, 10, 11, 21, 22, 39, 40) aufweist, welcher dazu eingerichtet ist, die Folie während des Vorschubs in einem Greifbereich gegriffen zu halten und sich mit einer Entfernbewegung von der Folie zu entfernen,
***dadurch gekennzeichnet, dass***
die Fügeanlage dazu eingerichtet ist, den Greifbereich zumindest teilweise einem Nutzen zuzuschlagen,
indem die Fügeanlage dazu eingerichtet ist, über den Greifbereich hinüber oder um den Greifbereich herum die Folie zu bearbeiten, sodass der Greifbereich jedenfalls nicht vollständig zu Abfallgitter (7') wird, indem die Fügeanlage dazu eingerichtet ist,
eine Umfangsschweißung (14) des Beutels zumindest einen Teil des Greifbereichs umgebend herzustellen und/oder eine Schweißnaht durch den Greifbereich hindurch verlaufend herzustellen.

2. Fügeanlage nach Anspruch 1, ***dadurch gekennzeichnet, dass*** die Fügeanlage dazu eingerichtet ist, den Greifer (4, 5, 10, 11, 21, 22, 39, 40) mit einer streifenden Abziehbewegung von der Folie zu entfernen, und zwar senkrecht zur, schräg zur und/oder längs in Maschinenrichtung.

3. Fügeanlage nach Anspruch 1 oder 2, ***dadurch gekennzeichnet, dass*** sie dazu eingerichtet ist, die Greiferöffnebewegung erst dann zu beginnen oder ihren wesentlichen Hub durchführen zu lassen, wenn die Entfernbewegung bereits beendet ist.

4. Fügeanlage nach einem der vorstehenden Ansprüche, ***dadurch gekennzeichnet, dass*** sie dazu eingerichtet ist, den Greifer (4, 5, 10, 11, 21, 22, 39, 40) in einer Folienebene von der Folie zu lösen.

5. Fügeanlage nach einem der vorstehenden Ansprüche, ***dadurch gekennzeichnet, dass*** sie dazu eingerichtet ist, die Greiferöffnebewegung mehrstufig durchzuführen.

6. Fügeanlage nach einem der vorstehenden Ansprüche, ***dadurch gekennzeichnet, dass*** der Greifer (4, 5, 10, 11, 21, 22, 39, 40) zum Greifen eines Seitenrands der Folie angeordnet ist, bevorzugt neben dem Seitenrand und auf dessen Höhe, und/oder wobei zwei Greifer (4, 5, 10, 11, 21, 22, 39, 40) vorgesehen sind, welche an gegenüber liegenden Seitenrändern zum Greifen der Folie angeordnet sind.

7. Fügeanlage nach einem der vorstehenden Ansprüche, ***dadurch gekennzeichnet, dass*** ein hinterer Haltemechanismus vorgesehen ist, welcher dazu eingerichtet ist, die Folie beim Einführen in das Bearbeitungswerkzeug in einem Bereich hinter einem Bearbeitungsbereich zu halten, also im Bezug zum Greifer (4, 5, 10, 11, 21, 22, 39, 40) gegen die Maschinenrichtung versetzt.

8. Fügeanlage nach einem der vorstehenden Ansprüche, ***dadurch gekennzeichnet, dass*** eine Haltezange vorgesehen ist, welche einen Abreißhubgeber aufweist, um die Haltezange bevorzugt bei geschlossenem Bearbeitungswerkzeug gegen die Maschinenrichtung zu bewegen.

9. Fügeanlage nach einem der vorstehenden Ansprüche, ***dadurch gekennzeichnet, dass*** der Greifer (4, 5, 10, 11, 21, 22, 39, 40) dazu eingerichtet ist, die Folie an einer vorderen Position zu greifen, sodass er einem überwiegenden Teil der Folie beim Vorschub in das Bearbeitungswerkzeug vorausläuft.

10. Fügeanlage nach einem der vorstehenden Ansprüche, ***dadurch gekennzeichnet, dass*** der Greifer (4, 5, 10, 11, 21, 22, 39, 40) an einem in Maschinenrichtung angetrieben vorschiebbaren Vorschubgestell angeordnet ist, wobei der Greifer (4, 5, 10, 11, 21, 22, 39, 40) gegenüber dem Vorschubgestell einen Relativhubgeber aufweist, mittels welchem der Greifer um einen Relativhub zum Entfernen von der Folie relativbewegbar ist.

11. Fügeanlage nach einem der vorstehenden Ansprüche, ***dadurch gekennzeichnet, dass*** sie eingerichtet ist zum Herstellen und ggf. Befüllen eines Beutels für medizinische Zwecke, wobei die Bearbeitungsstation als Schweißstation ausgebildet sein kann, insbesondere mit einem kombinierten Schweiß-Trenn-Werkzeug (16).

12. Fügeanlage nach einem der vorstehenden Ansprüche, ***dadurch gekennzeichnet, dass*** sie dazu eingerichtet ist, über einen Greifbereich hinüber oder um den Greifbereich herum die Folie zu bearbeiten, und zwar bevorzugt ohne einen zu Abfallgitter werdenden Greifbereich, an welchem der Greifer (4, 5, 10, 11, 21, 22, 39, 40) positioniert war.

13. Verfahren zum Herstellen eines Zwischen- oder Endprodukts mittels einer Fügeanlage nach einem der vorstehenden Ansprüche, unter Verwendung einer Folie, mit Schritten:
∘ Einführen der Folie in einer Maschinenrichtung (2,35) in ein geöffnetes Bearbeitungswerkzeug an einer Bearbeitungsstation, unter Verwendung eines vorderen Greifers (4, 5, 10, 11, 21, 22, 39, 40);
∘ Schließen des Bearbeitungswerkzeugs zum Bearbeiten der Folie;
∘ Entfernen des Greifers (4, 5, 10, 11, 21, 22, 39, 40) von der gegriffenen Stelle der Folie;
∘ Verfahren des Greifers (4, 5, 10, 11, 21, 22, 39, 40) außerhalb des bevorzugt geschlossenen Bearbeitungswerkzeugs oder innerhalb des geöffneten bevorzugt sich schließenden Bearbeitungswerkzeugs, und zwar gegen die Maschinenrichtung (2,35), um dort für einen Folgetakt erneut Folie zu greifen,
wobei zusätzlich einer oder mehrere der folgenden Schritte durchgeführt werden:
a. Entfernen des Greifers (4, 5, 10, 11, 21, 22, 39, 40) von der Folie längs in Maschinenrichtung (2,35) oder in einer Richtung, welche eine Komponente längs in Maschinenrichtung aufweist;
b. zeitliches Abstimmen von Werkzeugschließen und Greiferentfernen, wobei die Schließbewegung des Bearbeitungswerkzeugs beginnt, bevor die Entfernbewegung des Greifers (4, 5, 10, 11, 21, 22, 39, 40) endet, insbesondere bevor die Entfernbewegung des Greifers (4, 5, 10, 11, 21, 22, 39, 40) beginnt;
c. zeitliches Abstimmen von Folienvorschub und Werkzeugschließen, wobei die Schließbewegung des Bearbeitungswerkzeugs beginnt, bevor der Vorschub der Folie vollzogen ist, also bevor die Folie ihre endgültige Bearbeitungsposition im Bearbeitungswerkzeug erreicht hat;
d. zeitliches Abstimmen von Greiferentfernen und Folienvorschub, wobei die Entfernbewegung des Greifers (4, 5, 10, 11, 21, 22, 39, 40) beginnt oder sogar abgeschlossen ist, bevor der Vorschub der Folie endet, also bevor die Folie ihre endgültige Bearbeitungsposition im Bearbeitungswerkzeug erreicht hat;
e. zeitliches Abstimmen von Greiferentfernen und Werkzeugschließen, wobei die Entfernbewegung des Greifers (4, 5, 10, 11, 21, 22, 39, 40) beginnt, bevor die Schließbewegung des Bearbeitungswerkzeugs beginnt oder endet, insbesondere bevor die Schließbewegung des Bearbeitungswerkzeugs das Bearbeitungswerkzeug mit dem Greifer (4, 5, 10, 11, 21, 22, 39, 40) kollidieren lässt;
f. zeitliches Abstimmen von Greiferöffnebewegung und Greiferentfernbewegung, wobei die Greiferöffnebewegung erst dann beginnt oder ihren wesentlichen Hub durchführt, wenn die Entfernbewegung bereits beendet ist, sodass sich der Greifer (4, 5, 10, 11, 21, 22, 39, 40) bereits dann vollständig von der Folie entfernt hat, wenn er noch nicht vollständig aufgegangen ist, wobei der Greifer (4, 5, 10, 11, 21, 22, 39, 40) sein Aufgehen nach dem vollständigen Entfernen von der Folie fortsetzt;
g. zeitliches und örtliches Abstimmen von Werkzeugschließen, Greifen und Greiferentfernen, ein Greifbereich zumindest teilweise einem Nutzen zugeschlagen wird.

14. Verfahren nach Anspruch 13, wobei in Maschinenrichtung nach der Bearbeitungsstation eine weitere Station an der Fügeanlage angeordnet ist, insbesondere eine Weiterverschweißstation, eine Einzelnutzenseparierstation, eine Beutelbefüllstation, eine Transferstation und/oder eine Ausgabestation, ***dadurch gekennzeichnet, dass*** das Verfahren dazu eingesetzt wird, von der Bearbeitungsstation bis zur weiteren Station abfallfrei zu fahren, indem über einen Greifbereich hinüber oder um den Greifbereich herum bearbeitet wird, und zwar bevorzugt ohne einen zu Abfallgitter (7') werdenden Greifbereich, an welchem der Greifer positioniert war.

## Claims

1. Joining machine
equipped for manufacturing a bag for medical purposes, having a station generating economic benefits for a film, having an opening and closing processing tool at the station generating economic benefit, the film being conveyed in a machine direction (2,35) through the joining machine and, for introducing the film into the opened machining tool, a driven inserting device is provided, which comprises a gripper (4, 5, 10, 11, 21, 22, 39, 40), which is devised to move the film during the feeding operation in a gripping area and move away from the film with a removal movement, ***characterized in that***
the joining machine is set up to add a benefit at least partially to the gripping area, **in that** the joining machine is configured to process that the gripping area, in order to process the film over or around the gripping area, so that the gripping area does not become scrap (7), at least not completely, **in that** the joining machine is so configured so as to produce a peripheral weld ⁽¹⁴⁾ of the bag at least around a portion of the gripping area and / or a welded seam extending through the gripping area.

2. The joining machine of claim 1, **characterized in that** the joining machine is configured for the purpose of removing the gripper (4, 5, 10, 11, 21, 22, 39, 40) with a grazing stripping motion from the film, perpendicularly to, obliquely to and / or along the machine direction.

3. The joining machine of claims 1 or 2, **characterized in that** the machine is configured to commence the gripper opening motion or to let the machine carry out its essential travel only when the removal motion is already completed.

4. The joining machine of one of the preceding claims, **characterized in that** it is configured to release the gripper (4, 5, 10, 11, 21, 22, 39, 40) from the film in a plane of the film.

5. The joining machine of one of the preceding claims, **characterized in that** it is configured to carry out the opening movement of the gripper in several steps.

6. The joining machine of one of the preceding claims, **characterized in that** the gripper (4, 5, 10, 11, 21, 22, 39, 40) of a side edge of the film preferably is disposed next to the side wall and at the level there of, and/or wherein two grippers (4, 5, 10, 11, 21, 27, 39, 40) are provided, which are disposed at opposite side edges to the gripper of the film.

7. The joining machine of one of the preceding claims, **characterized in that** a rear holding mechanism is provided, which is configured to hold the film while introducing it into the machining tool in an area behind a processing area, that is, with respect to the gripper (4, 5, 10, 11, 21, 22, 39, 40) offset against the machine direction.

8. The joining machine of one of the preceding claims, **characterized in that** holding forceps are provided, which have a tear-off generator to move the holding forceps preferably with the processing tool closed counter to the machine direction.

9. The joining machine of one of the preceding claims, **characterized in that** holding forceps are provided, which have a tear-off generator to move the holding forceps preferably with the processing tool closed counter to the machine direction.

10. The joining machine of one of the preceding claims, **characterized in that** the gripper (4, 5, 10, 11, 21, 22, 39, 40) is disposed at a frame, which can be shifted forwards in the machine direction, wherein the gripper (4, 5, 10, 11, 21, 22, 39, 40) has a relative transmitter, by means of which the gripper can be lifted relative to the feeding frame for removal from the film.

11. The joining machine of one of the preceding claims, **characterized in that** it is configured for producing and possibly filling a bag for medical purposes, wherein the processing station may be developed as a welding station, in particular, with a combined welding-separating tool (16).

12. The joining machine of one of the preceding claims, **characterized in that** it is configured to process the film over a gripping area behind or around the gripping area, and preferably without a gripping area, at which the gripper (4, 5, 10, 11, 21, 22, 39, 40) was positioned, becoming scrap.

13. A method for producing an intermediate or an end product by means of a joining machine of one of the preceding claims, using a film and the following steps:
- Introducing the film in a machine direction (^{2,35}) into an opened processing tool at a processing station, using a
front gripper (4, 5, 10, 11, 21, 22, 39, 40);
- Closing the processing tool for processing the film
- Removing the gripper (4, 5, 10, 11, 21, 22, 39, 40) from the gripped place of the film.
- Moving the gripper (4, 5, 10, 11, 21, 22, 39, 40) outside of the preferably closed machining tool or within the opened, preferably closing processing tool, counter to the machine direction (2, 35),
in order to take hold of another film there for a subsequent cycle,
wherein one or more of the following steps are carried out additionally.
a. removing the gripper (4, 5, 10, 11, 21, 22, 39, 40) from the film in the machine direction (^{2, 35})
or in a direction
which has a component in the machine direction.
b. timing of closing the tool and removing the gripper, wherein the closing motion of the processing tool commences before the removal movement of the gripper (4, 5, 10, 11, 21, 22, 39, 40) ends and, in particular, before the removal motion of the gripper (4, 5, 10, 11, 21, 22, 39, 40) commences,
c. timing of feeding of the film and closing of the tool, where the closing movement of the processing tool commences before the feeding of the film is completed, that is, before the film has reached its final processing position in the processing tool;
d. timing the removal of the gripper and the feeding of the film, wherein the removal movement of the gripper (4, 5, 10, 11, 21, 22, 39, 40) is commenced or even completed before the feeding of the film ends, that is, before the film has reached its final processing position in the processing tool;
e. timing the removal of the gripper and closing of the tool, wherein the removal movement of the gripper (4, 5, 10, 11, 21, 22, 39, 40) commences before the closing movement of the processing tool commences or ends, in particular before the closing movement of the processing tool lets the machining tool collide with the gripper (4, 5, 10, 11, 21, 22, 39, 40); timing of gripper opening movement and gripper removal movement, wherein the gripper opening movement commences or the essential stroke thereof commences only when the removal motion has already been completed, so that the gripper (4, 5, 10, 11, 21, 22, 39, 40) has already then removed itself completely from the film, if it has not yet fully opened, the gripper (4, 5, 10, 11, 21, 22, 39, 40) continuing its opening process after the complete removal from the film;
g. temporally and regionally tuning the tool closing, the gripping and removing of the gripper, a gripping area being added at least partially to a benefit.

14. The method of claim 13, wherein, in the machine direction after the processing station, a further station is arranged at the joining machine, in particular, a further welding station, a single use separation station, a bag filling station, a transfer station and / or an output station, **characterized in that** the method is used for moving waste away from the processing station to the further station by processing over a gripping area or around the gripping area, preferably without a gripping area, at which the gripper was positioned, becoming scrap.

## Revendications

1. Unité d'assemblage,
configurée pour la fabrication d'un sachet à des fins médicales,
avec une station de génération de bénéfices pour un film, au moyen d'un outil de traitement ouvrable et fermable sur la station de génération de bénéfices, le film étant transporté dans un dispositif de machine (2,35)
par l'unité d'assemblage et un dispositif d'introduction motorisé étant prévu pour l'introduction du film dans l'outil de traitement ouvert, présentant une pince (4, 5, 10, 11, 21, 22, 39, 40) configurée pour le maintien en prise du film dans une zone de la pince pendant l'avance et le retrait par un mouvement de retrait du film, ***caractérisée en ce que***
l'unité d'assemblage est configurée pour ajouter la zone de prise au moins en partie à un bénéfice,
par le fait que l'unité d'assemblage est configurée pour traiter le film au-dessus de la zone de prise ou autour de la zone de prise de façon à ce que la zone de prise ne devienne pas complètement une grille à déchets (7'),
par le fait que l'unité d'assemblage est configurée
pour réaliser une soudure périphérique (14) du sachet en entourant au moins une partie de la zone de prise et/ou pour réaliser un joint de soudure à travers la zone de prise.

2. Unité d'assemblage conformément à la revendication n°1, ***caractérisée en ce que*** l'unité d'assemblage est configurée pour retirer la pince (4, 5, 10, 11, 21, 22, 39, 40) du film par un mouvement d'extraction effleurant, et cela de façon perpendiculaire, oblique et/ou longitudinale dans le sens machine.

3. Unité d'assemblage conformément à la revendication n°1 ou n°2, ***caractérisée en ce que*** celle-ci est configurée pour commencer le mouvement d'ouverture de la pince ou effectuer sa course essentielle si le mouvement de retrait est déjà terminé.

4. Unité d'assemblage conformément à l'une des revendications précédentes, ***caractérisée en ce que*** celle-ci est configurée pour desserrer la pince (4, 5, 10, 11, 21, 22, 39, 40) du film dans un niveau du film.

5. Unité d'assemblage conformément à l'une des revendications précédentes, ***caractérisée en ce que*** celle-ci est configurée pour effectuer le mouvement d'ouverture de la pince sur plusieurs niveaux.

6. Unité d'assemblage conformément à l'une des revendications précédentes, ***caractérisée en ce que*** la pince (4, 5, 10, 11, 21, 22, 39, 40) est disposée pour la prise d'un bord latéral du film, de préférence à côté du bord latéral et à sa hauteur, et/ou deux pinces (4, 5, 10, 11, 21, 22, 39, 40) disposées sur des bords latéraux opposés pour la prise du film, étant prévues.

7. Unité d'assemblage conformément à l'une des revendications précédentes, ***caractérisée en ce qu***'un mécanisme de maintien arrière qui est configuré pour maintenir le film dans une zone derrière une zone de traitement lors de l'introduction dans l'outil de traitement, à savoir en décalage par rapport à la pince (4, 5, 10, 11, 21, 22, 39, 40) dans le sens contraire au sens machine, est prévu.

8. Unité d'assemblage conformément à l'une des revendications précédentes, ***caractérisée en ce qu*'**une pince de retenue présentant un transmetteur de course d'arrachage pour déplacer la pince de retenue de préférence avec l'outil de traitement fermé dans le sens contraire au sens machine, est prévue.

9. Unité d'assemblage conformément à l'une des revendications précédentes, ***caractérisée en ce que*** la pince (4, 5, 10, 11, 21, 22, 39, 40) est configurée pour saisir le film sur une position frontale de façon à ce qu'elle passe avant une partie essentielle du film lors de l'avance dans l'outil de traitement.

10. Unité d'assemblage conformément à l'une des revendications précédentes, ***caractérisée en ce que*** la pince (4, 5, 10, 11, 21, 22, 39, 40) est disposée sur un châssis d'avance motorisé et avançable dans le sens machine, la pince (4, 5, 10, 11, 21, 22, 39, 40) présentant un transmetteur de course relative par rapport au châssis d'avance, au moyen duquel la pince est déplaçable d'une course relative pour le retrait du film.

11. Unité d'assemblage conformément à l'une des revendications précédentes, ***caractérisée en ce que*** celle-ci est configurée pour la fabrication et, le cas échéant, le remplissage d'un sachet à des fins médicales, la station de traitement pouvant être conçue comme station de soudage, en particulier avec un outil de soudure-découpe (16) combiné.

12. Unité d'assemblage conformément à l'une des revendications précédentes, ***caractérisée en ce que*** celle-ci est configurée pour traiter le film au-dessus d'une zone de prise ou autour de la zone de prise, et cela de préférence sans zone de prise devenant une grille à déchets, sur laquelle la pince (4, 5, 10, 11, 21, 22, 39, 40) était positionnée.

13. Procédé pour la fabrication d'un produit intermédiaire ou fini au moyen d'une unité d'assemblage conformément à l'une des revendications précédentes, en utilisant un film, avec les étapes ci-après :
- Introduction du film dans un sens machine (2, 35) dans un outil de traitement ouvert sur une station de traitement, en utilisant une pince frontale (4, 5, 10, 11, 21, 22, 39, 40) ;
- Fermeture de l'outil de traitement pour le traitement du film ;
- Retrait de la pince (4, 5, 10, 11, 21, 22, 39, 40) de la zone de prise du film ;
- Déplacement de la pince (4, 5, 10, 11, 21, 22, 39, 40) à l'extérieur de l'outil de traitement de préférence fermée ou à l'intérieur de l'outil de traitement ouvert, de préférence se fermant, et cela dans le sens contraire au sens machine (2, 35),
pour y saisir à nouveau le film pour un cycle suivant,
une ou plusieurs des étapes suivantes étant en plus effectuées :
a. Retrait de la pince (4, 5, 10, 11, 21, 22, 39, 40) du film longitudinalement dans le sens machine (2,35)
ou dans un sens qui présente un composant longitudinalement dans le sens machine ;
b. Coordination temporelle entre la fermeture de l'outil et le retrait de la pince, le mouvement de fermeture de l'outil de traitement commençant avant la fin du mouvement de retrait de la pince (4, 5, 10, 11, 21, 22, 39, 40), en particulier avant que le mouvement de retrait de la pince (4, 5, 10, 11, 21, 22, 39, 40) commence ;
c. Coordination temporelle entre l'avance du film et la fermeture de l'outil, le mouvement de fermeture de l'outil de traitement commençant avant l'exécution de l'avance du film, à savoir avant que le film ait atteint sa position de traitement définitive dans l'outil de traitement ;
d. Coordination temporelle entre le retrait de la pince et l'avance du film, le mouvement de retrait de la pince (4, 5, 10, 11, 21, 22, 39, 40) commençant, voire étant terminé avant la fin de l'avance du film, à savoir avant que le film ait atteint sa position de traitement définitive dans l'outil de traitement ;
e. Coordination temporelle entre le retrait de la pince et la fermeture de l'outil, le mouvement de retrait de la pince (4, 5, 10, 11, 21, 22, 39, 40) commençant avant que le mouvement de fermeture de l'outil de traitement commence ou se termine, en particulier avant que le mouvement de fermeture de l'outil de traitement n'entraîne une collision entre l'outil de traitement et la pince (4, 5, 10, 11, 21, 22, 39, 40) ;
f. Coordination temporelle entre le mouvement d'ouverture de la pince et le mouvement de retrait de la pince, le mouvement d'ouverture de la pince ne commençant ou n'effectuant sa course essentielle que si le mouvement de retrait est déjà terminé de façon à ce que la pince (4, 5, 10, 11, 21, 22, 39, 40) soit déjà entièrement retirée du film quand elle n'est pas encore entièrement ouverte, la pince (4, 5, 10, 11, 21, 22, 39, 40) poursuivant son ouverture après le retrait complet du film ;
g. Coordination temporelle et locale entre la fermeture de l'outil, la prise et le retrait de la pince, une zone de prise étant ajoutée au moins en partie à un bénéfice.

14. Procédé conformément à la revendication n°13, une autre station étant disposée sur l'unité d'assemblage dans le sens machine après la station de traitement, en particulier une station de soudage ultérieur, une station de séparation des bénéfices, une station de remplissage de sachets, une station de transfert et/ou une station de sortie, ***caractérisée en ce que*** le procédé est utilisé pour un déplacement sans déchets de la station de traitement à la station suivante, le traitement se faisant au-dessus d'une zone de prise ou autour de la zone de prise, et cela de préférence sans zone de prise devenant une grille à déchets (7') sur laquelle la pince était positionnée.
